# EUROPÄISCHE PATENTSCHRIFT

(11) **EP 1 186 457 B1**
(45) Veröffentlichungstag und Bekanntmachung des Hinweises auf die Patenterteilung: **02.04.2003**
(21) Anmeldenummer: 01120044.1
(22) Anmeldetag: 21.08.2001
(51) Int. Cl.: B60K 15/077

(54) **Kraftstofftank**
Fuel tank
Réservoir de combustible

(30) Priorität: 30.08.2000 DE 10042529
(43) Veröffentlichungstag der Anmeldung: 13.03.2002
(73) Patentinhaber: Kautex Textron GmbH & Co. KG., 53229 Bonn (DE)
(72) Erfinder: Reinelt, Georg, 53229 Bonn (DE)
(74) Vertreter: Patentanwälte Lippert, Stachow, Schmidt & Partner

(56) Entgegenhaltungen:
- EP-A- 0 985 571
- DE-A- 19 833 696
- DE-A- 19 836 057
- FR-A- 2 665 672

## Beschreibung

Die Erfindung betrifft einen Kraftstofftank für ein Kraftfahrzeug mit wenigstens einem innerhalb des Kraftstofftanks angeordneten Reservoir, dem wenigstens eine Kraftstoffpumpe zugeordnet ist, und mit wenigstens einem Füllkanal, der so ausgebildet ist, daß wenigstens ein Teilstrom des durch diesen einströmenden Kraftstoffs unmittelbar dem Reservoir zuführbar ist.

Die Erfindung betrifft weiterhin eine Fülleinrichtung für einen Kraftstofftank mit einem Füllkanal, der so ausgebildet ist, daß wenigstens ein Teilstrom des durch diesen einströmenden Kraftstoffs unmittelbar einem in dem Kraftstofftank befindlichen Reservoir zuführbar ist.

Ein Kraftstofftank mit einer derartigen Befülleinrichtung bzw. eine solche Befülleinrichtung ist aus der DE 198 36 057 A1 bekannt.

In Kraftstofftanks ist üblicherweise die Kraftstoffpumpe in einem sogenannten Schwalltopf angeordnet, aus welchem diese ständig den Kraftstoff zum Motor des Kraftfahrzeugs fördert. Der Schwalltopf wiederum wird ständig aus dem Kraftstoffbehälter mit Kraftstoff befüllt, so daß sich mit fortschreitendem Kraftstoffverbrauch zunächst der den Schwalltopf umgebende Kraftstoffbehälter und zuletzt der Schwalltopf selbst entleert.

Bei ausreichend hohem Füllstand im Kraftstoffbehälter wird in der Regel ein entsprechend hoher Füllstand des zumeist an der tiefsten Stelle des Kraftstoffbehälters angeordneten Schwalltopfs gewährleistet sein. Bei Betankung des Kraftstoffbehälters mit verhältnismäßig geringen Kraftstoffmengen, beispielsweise bei einer Erstbetankung oder einer Notbetankung ist nicht ohne weiteres gewährleistet, daß der Schwalltopf hinreichend mit Kraftstoff befüllt ist. In der DE 198 36 057 und in verschiedenen anderen Veröffentlichungen, beispielsweise in der DE 198 33 696 A1 werden daher Befülleinrichtungen beschrieben, die eine bevorzugte bzw. vorrangige Betankung des Schwalltopfs ermöglichen. Beispielsweise wird hierzu in der DE 198 33 696 A1 vorgeschlagen, den durch das Füllrohr des Kraftstofftanks strömenden Kraftstoff direkt in das Reservoir zu führen. Dadurch ist zumindest bei einer Notbetankung gewährleistet, daß der Kraftstoff zunächst bevorzugt und gegebenenfalls vollständig in den Schwalltopf gelangt.

Eine solche Lösung wird aber im Falle der Betankung mittels Zapfpistole als nachteilhaft empfunden, wenn nur kleine Mengen mit hoher Füllgeschwindigkeit getankt werden, beispielsweise bei der Erstbetankung. Bei einer Befüllung mit einer Zapfpistole können dem Kraftstoffbehälter je nach Auslegung der Zapfanlage bis zu 60 l Kraftstoff pro Minute zugeführt werden, so daß eine solche Anordnung unter Umständen zum Aufschäumen und folglich zum Überschwappen des Kraftstoffs führt, so daß eine vollständige Füllung des Reservoirs letztendlich nicht gewährleistet ist.

In der DE 198 36 057 wird daher vorgeschlagen, auslaufseitig an dem Befüllstutzen des Kraftstoffbehälters jeweils ein einen Abzweig für den Kraftstoffbehälter und den Schwalltopf aufweisendes Verteilerelement vorzusehen. Als Verteilerelement dienen mehrere zu Bündeln angeordnete Rohre, die auslaufseitig des Einfüllstutzens hinter einem Rückschlagventil angeschlossen sind, so daß in etwa durch den Querschnitt der Rohre eine proportionale Aufteilung des zu betankenden Volumenstroms auf den Schwalltopf und den den Schwalltopf umgebenden Kraftstoffbehälter erfolgt. Bei Befüllung mit einem geringen Volumenstroms soll sichergestellt werden, daß der gesamte Kraftstoff dem Schwalltopf zugeführt wird. Dies wird dadurch erreicht, daß der dem Schwalltopf zugeordnete Abzweig des Verteilerelements unten angeordnet ist.

Eine solche Anordnung vermeidet zwar eine allzu große Schaumbildung im Schwalltopf bereits dadurch, daß der Volumenstrom aufgeteilt wird. Es kann aber nicht in jedem Falle sichergestellt werden, daß bei Betankung kleiner Volumenströme ein bestimmter Volumenstrom vorrangig dem Schwalltopf zugeführt wird. Insbesondere kann dies bei Schräglage des Kraftfahrzeugs bei der Betankung nicht gewährleistet werden. Auch ist nicht ausgeschlossen, daß bei gefülltem Reservoir bei der Betankung ein Rückstau des Kraftstoffs in den Rohren auftritt.

Der Erfindung liegt daher die Aufgabe zugrunde, einen Kraftstofftank der eingangs genannten Art so zu verbessern, daß eine vorrangige Befüllung des Schwalltopfs unabhängig von der Füllmenge pro Zeiteinheit sichergestellt ist, wobei ebenfalls ein Aufschäumen des Kraftstoffs in dem Schwalltopf vermieden werden soll.

Der Erfindung liegt weiterhin die Aufgabe zugrunde, eine Fülleinrichtung für einen Kraftstofftank bereitzustellen, die die zuvor beschriebenen Nachteile des Standes der Technik vermeidet.

Die Aufgabe wird gelöst durch einen Kraftstofftank der eingangs genannten Art, der sich dadurch auszeichnet, daß der Füllkanal auslaufseitig in eine offene Auffangwanne oder dergleichen Behältnis mündet, welches über wenigstens einen Ablauf mit dem Reservoir kommuniziert. Die Aufgabe wird auch gelöst durch eine Fülleinrichtung nach Anspruch 9. Als Auffangwanne kann auch ein trichterförmiges oder rinnenförmiges Behältnis vorgesehen sein.

Unter Reservoir im Sinne der Erfindung ist ein Restmengenbehälter zu verstehen, wie er im Stand der Technik auch als Schwalltopf oder Beruhigungstopf bezeichnet wird.

Diese Lösung hat den Vorzug, daß ein Rückstau aus dem Reservoir nicht eintreten kann. Außerdem hat die zuvor beschriebene Lösung den Vorzug, daß die Füllgeschwindigkeit des Reservoirs praktisch nur bei der Reservekanisterbetankung mit geringsten Volumenströmen von der Füllgeschwindigkeit bei der Betankung abhängig ist, d. h. es findet über einen großen Füllgeschwindigkeitsbereich eine Abkopplung zwischen der Befüllung des Reservoirs und der Betankungsgeschwindigkeit statt. Hierdurch ist es beispielsweise möglich, auch Reservoire mit kleinstem Aufnahmevolumen zuverlässig so zu befüllen, daß ein Überschäumen des Kraftstoffs aus diesen vermieden wird. Die Auffangwanne bildet einen Volumenpuffer, der eine recht gleichmäßige Befüllung des Reservoirs ermöglicht, auch beispielsweise wenn bei der Reservekanisterbetankung bei zügiger Einfüllung des Kraftstoffs eine schwallweise Beschickung des Füllkanals bzw. des diesem vorgelagerten Einfüllstutzens erfolgt. Bei der proportionalen Aufteilung des zu betankenden Volumenstroms an Kraftstoff auf den Schwalltopf und den den Schwalltopf umgebenden Kraftstoffbehälter durch entsprechende Aufteilung des Rohrquerschnitts des Füllrohrs oder des Einfüllstutzens, wie dies beispielsweise bei der DE 198 36 057 vorgeschlagen wird, ist nach wie vor der dem Reservoir zugeführte Volumenstrom an Kraftstoff linear proportional zu dem insgesamt getankten Volumenstrom, so daß bei Betankung mit hoher Füllgeschwindigkeit dem Reservoir immer noch ein verhältnismäßig hoher Volumenstrom zugeführt wird, der zum Aufschäumen und Überschwappen des Kraftstoffs in dem Reservoir führen kann. Dies ist insbesondere bei Betankung kleiner Mengen mit hoher Füllgeschwindigkeit kritisch.

Dies wird mit der erfindungsgemäßen Lösung zuverlässig vermieden, denn dort wird im Gegensatz zum Stand der Technik ein Teilvolumenstrom aus dem insgesamt bei der Betankung zugeführten Kraftstoff erst nach Austritt des Kraftstoffs aus dem Füllkanal entnommen.

Zweckmäßigerweise mündet der Ablauf über einen Schlauch oder ein Rohr in das Reservoir oder ist unmittelbar an dieses angeschlossen, wobei der lichte Querschnitt des Ablaufs kleiner als der lichte Querschnitt des Füllkanals ist. Hierdurch wird schließlich die gewünschte Abkopplung der Befüllung des Reservoirs von dem bei der Betankung insgesamt dem Füllkanal aufgegebenen Volumenstrom erreicht.

Bei Betankung mit hohen Volumenströmen, beispielsweise im Bereich von 60 l/min, würde der von dem Ablauf nicht mehr aufgenommene Kraftstoff in der Auffangwanne überlaufen und frei in den Tank austreten. Der dem Reservoir zugeführte Volumenstrom an Kraftstoff wäre dennoch innerhalb gewisser Schwankungstoleranzen etwa konstant.

Vorzugsweise ist die Auffangwanne einstückig mit dem Füllkanal ausgebildet.

Der Ablauf ist bevorzugt an der in der Einbaulage tiefsten Stelle der Auffangwanne angeordnet.

Die Auffangwanne kann in Richtung des Ablaufs ein Gefälle aufweisen, so daß auch bei Schrägstellung eines zu betankenden Kfz gewährleistet ist, daß beispielsweise das zu betankende Reservevolumen aus dem Kanister nahezu vollständig in das Reservoir gelangt.

Bei einem verzweigten und komplizierten Tankaufbau kann es zweckmäßig sein, in dem Tank mehrere Fördereinheiten, d. h. Reservoire mit dem jeweiligen Reservoir zugeordneter Kraftstoffpumpe, vorzusehen. In diesem Fall kann die Auffangwanne mit mehreren Abläufen versehen sein, so daß diese gleichzeitig als Verteilerelement dient.

Darüber hinaus kann der Füllkanal mit Mitteln zur Rückschwallbegrenzung versehen sein.

Als Mittel zur Rückschwallbegrenzung ist zweckmäßigerweise einlaufseitig in dem Füllkanal ein Rückschlagventil vorgesehen.

Die Erfindung wird nachstehend anhand eines in den Zeichnungen dargestellten Ausführungsbeispiels erläutert.

Es zeigen:
- Fig. 1: eine schematische Seitenansicht eines Kraftstofftanks gemäß der Erfindung,

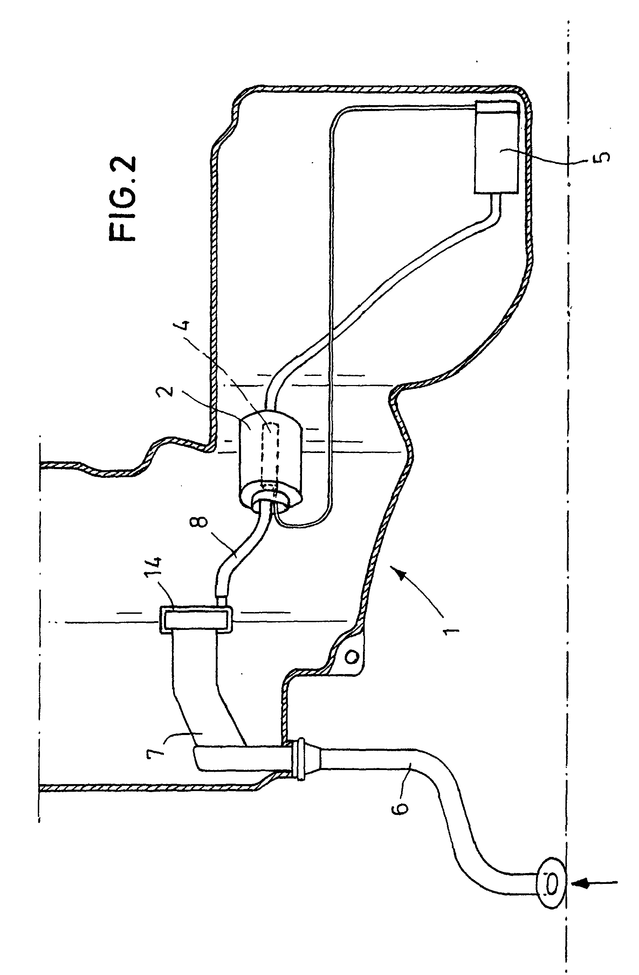

- Fig. 2: einen Schnitt entlang der Linien II-II in Fig. 1,
- Fig. 3: eine perspektivische Ansicht des Füllkanals,

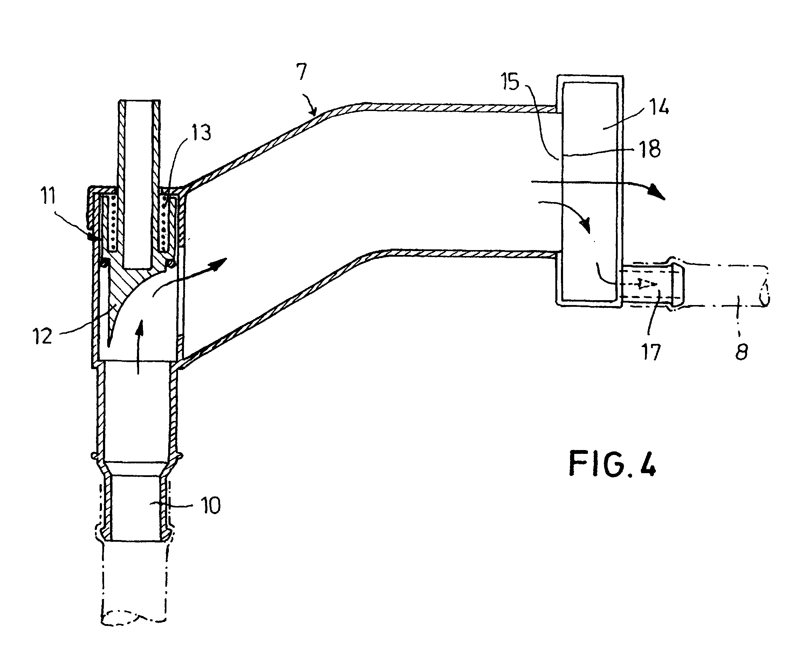

- Fig. 4: einen Schnitt entlang der Linien IV-IV in Fig. 3 in Durchlaßstellung des Rückschlagventils und
- Fig. 5: die in Fig. 4 dargestellte Ansicht in Sperrstellung des Rückschlagventils.

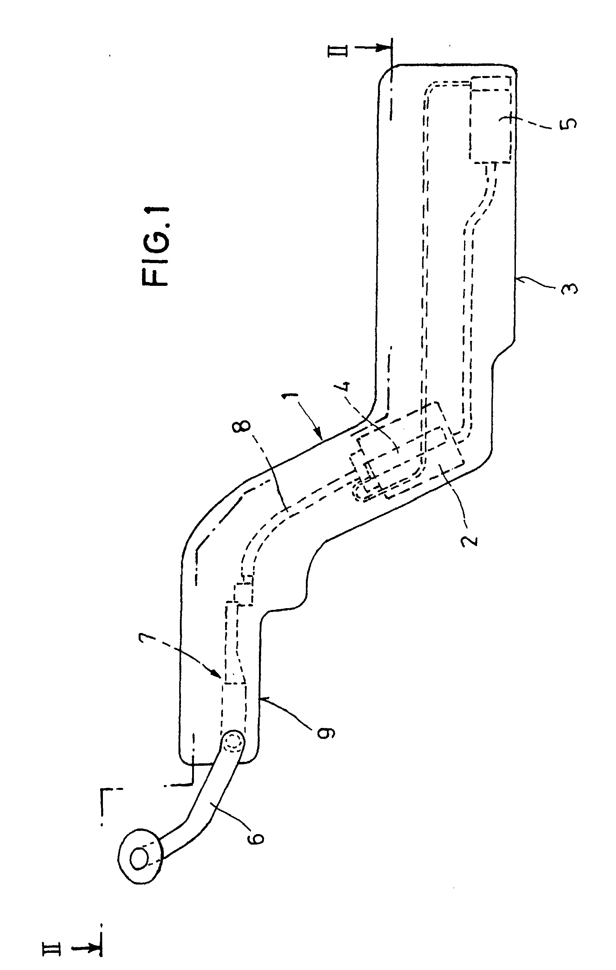

Der in Fig. 1 dargestellte Kraftstofftank 1 kann auf unterschiedliche Weise aus Kunststoff oder Metall hergestellt worden sein. Er ist mit einem Restmengenbehälter bzw. Reservoir 2 versehen, das ein merklich kleineres Volumen als der Tank 1 in seiner Gesamtheit aufweist und in geeigneter Weise am Boden 3 des Tanks 1 befestigt ist. In dem Reservoir 2, das im Stand der Technik gelegentlich auch als Schwalltopf bezeichnet wird, ist eine elektrische Kraftstoffpumpe 4 angeordnet, die den Kraftstoff aus dem Reservoir 2 zum Motor eines Kraftfahrzeuges führt. Auf an sich bekannte Art und Weise wird aus dem Förderstrom der Kraftstoffpumpe ein Teilstrom zum Betreiben einer Saugstrahlpumpe 5 abgezweigt, die wiederum den Kraftstoff aus dem Kraftstofftank in das Reservoir 2 fördert. Das Reservoir kann bis auf einen Überlauf in sich abgeschlossen sein, dieses kann aber auch oberseitig offen ausgebildet sein.

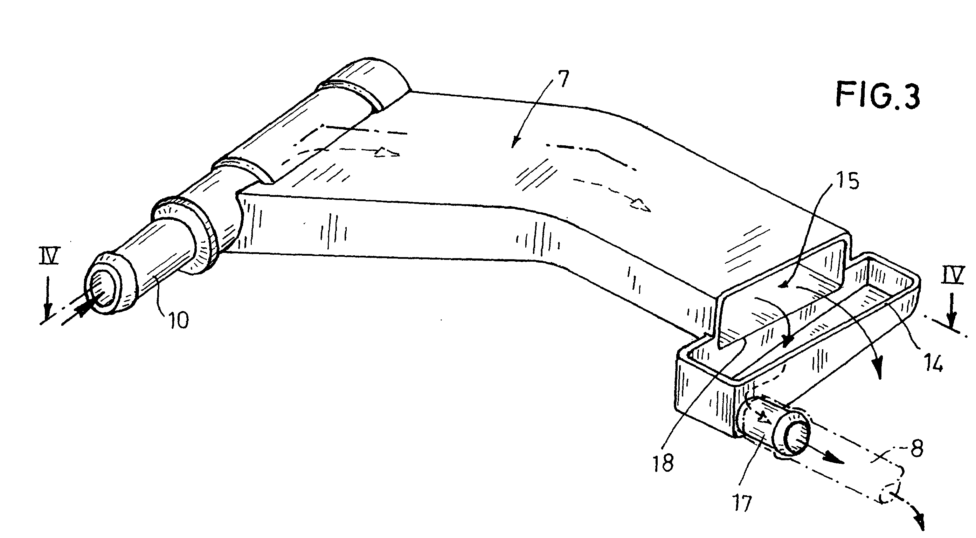

Bei dem in den Figuren dargestellten Ausführungsbeispiel ist das von dem Reservoir 2 bereitgestellte Volumen, aus welchem die Kraftstoffpumpe 4 fördert, verhältnismäßig klein. Der Kraftstofftank umfaßt weiterhin einen außerhalb desselben angeordneten Einfüllstutzen 6 und einen im Kraftstofftank 1 unmittelbar an den Einfüllstutzen 6 angeschlossenen Füllkanal 7, der in Fig. 3 im Detail dargestellt ist.

Wie insbesondere aus Fig. 1 ersichtlich ist, ist der Füllkanal 7 in regulärer Einbaulage des Kraftstofftanks 1 im Niveau deutlich oberhalb des Reservoirs 2 angeordnet, das üblicherweise an tieferer oder an der tiefsten Stelle des Kraftstofftanks 1 vorzusehen ist.

Um sicherzustellen, daß bei der Betankung das Reservoir 2 vorrangig mit Kraftstoff befüllt wird, wird der Kraftstoff von dem Füllkanal 7 über eine Zuleitung 8 dem Reservoir 2 zugeführt.

In dem dargestellten Ausführungsbeispiel hat der Kraftstofftank 1 mehrere Niveaus und ist als verhältnismäßig flaches, verzweigtes und abgestuftes Bauteil ausgebildet. Entsprechend der räumlich beengten Verhältnisse in dem Kraftstofftank 1 ist der Füllkanal 7 als flacher Kanal mit rechteckigem Querschnitt ausgebildet, wie dies aus Fig. 3 ersichtlich ist. Dieser kann beispielsweise auf der obersten Ebene 9 des Kraftstofftanks 1 auf dessen Boden 3 aufliegen.

Der Füllkanal 7 besitzt einen im Querschnitt runden Einlaufstutzen 10, der in Einbaulage in den Einfüllstutzen 6 eingesetzt ist. Die Erstreckung des Einlaufstutzens 10 ist etwa senkrecht oder in einem stumpfen Winkel zur Haupterstreckungsrichtung des Füllkanals 7, so daß der den Füllkanal durchströmende Kraftstoff zunächst eine Umlenkung erfährt.

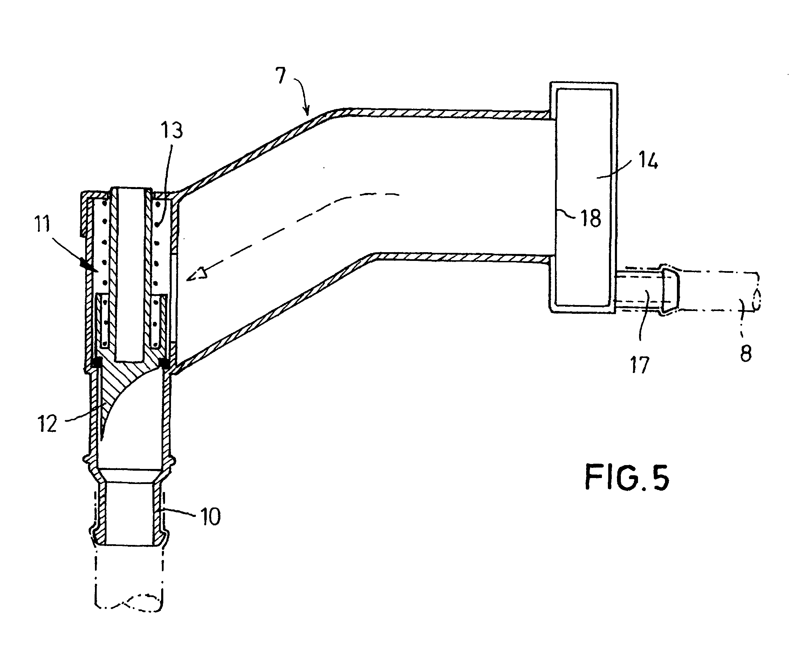

In dem Einlaufstutzen 10 ist ein Rückschlagventil 11 vorgesehen, das federbelastet in geschlossener Stellung gehalten wird, wie dies in Fig. 5 dargestellt ist. Der Ventilkörper 12 des Rückschlagventils 11 ist als Kurvensegment ausgebildet, derart, daß der Kraftstoff in geöffneter Stellung des Rückschlagventils 11 eine möglichst drallfreie Umlenkung in den rechteckigen Querschnitt des Füllkanals 7 erfährt.

Das Rückschlagventil 11 ist so eingestellt, daß der Druck des in den Einlaufstutzen 10 hineinfließenden Kraftstoffs eine Verschiebung des Ventilkörpers 12 und damit ein Öffnen des Rückschlagventils 11 bewirkt. Die Federsteifigkeit der den Ventilkörper 12 in der geschlossenen Stellung haltenden Druckfeder 13 ist so gewählt, daß bereits kleinste Füllmengen, beispielsweise bei der Reservekanisterbetankung, ein Öffnen des Ventilkörpers 12 bewirken.

Auslaufseitig, d. h. auf der dem Einlaufstutzen 10 abgekehrten Seite des Füllkanals 7 ist eine Auffangwanne 14 vorgesehen, die einstückig mit dem Füllkanal 7 ausgebildet ist und die sich ausgehend von der regulären Einbaulage des Füllkanals 7 vollständig unterhalb dessen Auslauföffnung 15 erstreckt.

Der Boden 16 der Auffangwanne 14 ist mit Gefälle zu einem an etwa tiefster Stelle dieser angeordneten Ablauf 17 ausgebildet.

Wie bereits vorstehend erwäht, kommuniziert der Ablauf 17 über die Zuleitung 8 unmittelbar mit dem Reservoir 2.

Um zu gewährleisten, daß die Auffangwanne 14 bei hohen Betankungsgeschwindigkeiten bzw. bei hohen Füllgeschwindigkeiten nicht vollständig von dem einströmenden Kraftstoff überströmt wird, könnte diese beispielsweise in ihrer Bautiefe in Strömungsrichtung des Kraftstoffs entsprechend variiert werden. Weiterhin ist es möglich, beispielsweise die stromabwärts des Kraftstoffstroms angeordnete Wandung der Auffangwanne 14 zu erhöhen.

Schließlich kann die mit 18 bezeichnete Einlaufkante der Auffangwanne 14 gerundet sein, um ein Anliegen der Strömung bei niedrigen Strömungsgeschwindigkeiten in diesem Bereich zu fördern.

Wie aus der Zeichnung ohne weiteres ersichtlich ist, ist der lichte Querschnitt des Füllkanals 7 um ein vielfaches größer als der lichte Querschnitt des Ablaufs 10 bzw. der Zuleitung 8, so daß die oberseitig offene Auffangwanne 14 ebenfalls die Funktion eines Pufferbehälters bzw. Zwischenbehälters besitzt.

### Bezugzeichenliste

- 1: Kraftstofftank
- 2: Reservoir
- 3: Boden
- 4: Kraftstoffpumpe
- 5: Saugstrahlpumpe
- 6: Einfüllstutzen
- 7: Füllkanal
- 8: Zuleitung
- 9: oberste Ebene des Kraftstofftanks
- 10: Einlaufstutzen
- 11: Rückschlagventil
- 12: Ventilkörper
- 13: Druckfeder
- 14: Auffangwanne
- 15: Auslauföffnung
- 16: Boden der Auffangwanne
- 17: Ablauf
- 18: Einlaufkante

## Patentansprüche

1. Kraftstofftank für ein Kraftfahrzeug mit wenigstens einem innerhalb des Kraftstofftanks angeordneten Reservoir (2), dem wenigstens eine Kraftstoffpumpe (4) zugeordnet ist, und mit wenigstens einem Füllkanal (7), der so ausgebildet ist, daß wenigstens ein Teilstrom des durch diesen einströmenden Kraftstoffs unmittelbar dem Reservoir (2) zuführbar ist, **dadurch gekennzeichnet, daß** der Füllkanal (7) auslaufseitig in eine offene Auffangwanne (14) oder dergleichen Behältnis mündet, welches über wenigstens einen Ablauf (17) mit dem Reservoir (2) kommuniziert.

2. Kraftstofftank nach Anspruch 1, **dadurch gekennzeichnet, daß** der Ablauf (17) über einen Schlauch oder ein Rohr in das Reservoir (2) mündet oder unmittelbar an dieses angeschlossen ist, und daß der lichte Querschnitt des Ablaufs (17) kleiner als der lichte Querschnitt des Füllkanals (7) ist.

3. Kraftstofftank nach einem der Ansprüche 1 oder 2, **dadurch gekennzeichnet, daß** die Auffangwanne (14) einstückig mit dem Füllkanal (7) ausgebildet ist.

4. Kraftstofftank nach einem der Ansprüche 1 bis 3, **dadurch gekennzeichnet, daß** der Ablauf (17) an der in der Einbaulage tiefsten Stelle der Auffangwanne (14) angeordnet ist.

5. Kraftstofftank nach einem der Ansprüche 1 bis 4, **dadurch gekennzeichnet, daß** die Auffangwanne (14) mit mehreren Abläufen versehen ist.

6. Kraftstofftank nach einem der Ansprüche 1 bis 5, **dadurch gekennzeichnet, daß** die Auffangwanne (14) in Richtung des Ablaufs (18) Gefälle aufweist.

7. Kraftstofftank nach einem der Ansprüche 1 bis 6, **dadurch gekennzeichnet, daß** der Füllkanal (7) mit Mitteln zur Rückschwallbegrenzung versehen ist.

8. Kraftstofftank nach Anspruch 7, **dadurch gekennzeichnet, daß** als Mittel zur Rückschwallbegrenzung einlaufseitig in dem Füllkanal ein Rückschlagventil (11) vorgesehen ist.

9. Fülleinrichtung für einen Kraftstofftank eines Kraftfahrzeugs mit wenigstens einem innerhalb des Kraftstofftanks angeordneten Reservoir (2), dem wenigstens eine Kraftstoffpumpe (4) zugeordnet ist, mit einem Füllkanal (7), der so ausgebildet ist, daß wenigstens ein Teilstrom des durch diesen einströmenden Kraftstoffs unmittelbar dem Reservoir (2) zuführbar ist, **dadurch gekennzeichnet, daß** der Füllkanal (7) auslaufseitig in eine offene Auffangwanne (14) oder dergleichen Behältnis mündet, welches über wenigstens einen Ablauf (17) mit dem Reservoir kommuniziert.

## Claims

1. A fuel tank for a motor vehicle comprising at least one reservoir (2) which is arranged within the fuel tank and with which at least one fuel pump (4) is associated, and at least one filling conduit (7) which is so designed that at least a partial flow of the fuel flowing in therethrough can be fed directly to the reservoir (2), **characterised in that** at the delivery end the filling conduit (7) opens into an open catch receptacle (14) or the like container which communicates with the reservoir (2) by way of at least one discharge (17).

2. A fuel tank according to claim 1 **characterised in that** the discharge (17) opens by way of a hose or a pipe into the reservoir (2) or is connected directly thereto and that the internal cross-section of the discharge (17) is smaller than the internal cross-section of the filling conduit (7).

3. A fuel tank according to one of claims 1 and 2 **characterised in that** the catch receptacle (14) is formed in one piece with the filling conduit (7).

4. A fuel tank according to one of claims 1 to 3 **characterised in that** the discharge (17) is arranged at the location of the catch receptacle (14), which is lowest in the position of installation.

5. A fuel tank according to one of claims 1 to 4 **characterised in that** the catch receptacle (14) is provided with a plurality of discharges.

6. A fuel tank according to one of claims 1 to 5 **characterised in that** the catch receptacle (14) has a fall in the direction of the discharge (17).

7. A fuel tank according to one of claims 1 to 6 **characterised in that** the filling conduit (7) is provided with means for limiting blowback.

8. A fuel tank according to claim 7 **characterised in that** a check valve (11) is provided at the entry end in the filling conduit as the means for limiting blowback.

9. A filling arrangement for a fuel tank of a motor vehicle comprising at least one reservoir (2) which is arranged within the fuel tank and with which at least one fuel pump (4) is associated, and a filling conduit (7) which is so designed that at least a partial flow of the fuel flowing in therethrough can be fed directly to the reservoir (2), **characterised in that** at the delivery end the filling conduit (7) opens into an open catch receptacle (14) or the like container which communicates with the reservoir by way of at least one discharge (17).

## Revendications

1. Réservoir de carburant pour un véhicule automobile, comprenant au moins une réserve (2), agencée à l'intérieur du réservoir de carburant et à laquelle est associée au moins une pompe à carburant (4), et comprenant au moins un conduit de remplissage (7) qui est conçu de telle sorte qu'au moins une partie du flux du carburant affluant à travers celui-ci peut être acheminée directement vers la réserve (2), **caractérisé en ce que** le tube de remplissage (7), du côté de la sortie, débouche dans une cuve de réception (14) ouverte ou un récipient analogue, qui communique avec la réserve (2) par l'intermédiaire d'au moins un tube de sortie (17).

2. Réservoir de carburant selon la revendication 1, **caractérisé en ce que** le tube de sortie (17) communique avec la réserve (2) par l'intermédiaire d'un tuyau flexible ou d'un tube ou est raccordé directement à celle-ci, et **en ce que** la section intérieure du tube de sortie (17) est inférieure à la section intérieure du tube de remplissage (7).

3. Réservoir de carburant selon la revendication 1 ou 2, **caractérisé en ce que** la cuve de réception (14) est conçue d'une seule pièce avec le tube de remplissage (7).

4. Réservoir de carburant selon une des revendications 1 à 3, **caractérisé en ce que** le tube de sortie (17) est agencé au niveau de la partie la plus profonde, dans la position montée, de la cuve de réception (14).

5. Réservoir de carburant selon une des revendications 1 à 4, **caractérisé en ce que** la cuve de réception (14) est munie de plusieurs tubes de sortie.

6. Réservoir de carburant selon une des revendications 1 à 5, **caractérisé en ce que** la cuve de réception (14) est inclinée pour l'écoulement en direction du tube de sortie (17).

7. Réservoir de carburant selon une des revendications 1 à 6, **caractérisé en ce que** le tube de remplissage (7) est muni de moyens destinés à limiter les rétro-projections.

8. Réservoir de carburant selon la revendication 7, **caractérisé en ce qu'**un clapet de non-retour (11), formant le moyen de limitation des rétro-projections, est prévu dans le tube de remplissage du côté de l'entrée.

9. Dispositif de remplissage d'un réservoir de carburant pour un véhicule automobile, comprenant au moins une réserve (2), agencée à l'intérieur du réservoir de carburant et à laquelle est associée au moins une pompe à carburant (4), comprenant un tube de remplissage (7) qui est conçu de telle sorte qu'au moins une partie du flux du carburant affluant à travers celui-ci peut être acheminée directement vers la réserve (2), **caractérisé en ce que** le tube de remplissage (7), du côté de la sortie, débouche dans une cuve de réception (14) ouverte ou un récipient analogue, qui communique avec la réserve par l'intermédiaire d'au moins un tube de sortie (17).
